# EUROPEAN PATENT APPLICATION

(11) **EP 4 611 128 A1**
(43) Date of publication of application: **03.09.2025**
(21) Application number: 24854459.5
(22) Date of filing: 14.08.2024
(51) Int. Cl.: H01M 10/6557, H01M 10/647, H01M 10/625

(54) **BATTERY CELL ASSEMBLY AND BATTERY PACK COMPRISING SAME**

(30) Priority: 16.08.2023 KR 20230106728
(71) Applicant: LG Energy Solution, Ltd., Seoul 07335 (KR)
(72) Inventor: JANG, Sung Hwan, Daejeon 34122 (KR); KIM, Gwan Woo, Daejeon 34122 (KR); KIM, Da Young, Daejeon 34122 (KR); KIM, Jae Wook, Daejeon 34122 (KR); LEE, Tae Kyeong, Daejeon 34122 (KR); SHIN, Byeong Ha, Daejeon 34122 (KR)
(74) Representative: BCKIP Part mbB
(86) International application number: PCT/KR2024/012098
(87) International publication number: WO 2025/037908

(57) **Abstract**

The present technology provides a battery cell assembly including: a cell block with a plurality of battery cells; a first cover plate facing a first surface of the cell block, and including a first cooling channel; a second cover plate facing a second surface of the cell block, and including a second cooling channel; a supply pipe into which a cooling fluid supplied from the outside flows, the supply pipe including a first supply channel connected to an inlet of the first cooling channel and a second supply channel connected to an inlet of the second cooling channel; and a discharge pipe configured to discharge the cooling fluid to the outside, the discharge pipe including a first discharge channel connected to an outlet of the first cooling channel and a second discharge channel connected to an outlet of the second cooling channel.

## Description

### [Technical Field]

The present invention relates to a battery cell assembly and a battery pack including the same.

This application claims the benefit of priority based on Korean Patent Application No. 10-2023-0106728, filed on August 16, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery cell assembly with improved safety, and a battery pack.

### [Technical Solution]

An aspect of the present invention provides a battery cell assembly including: a cell block with a plurality of battery cells; a first cover plate facing a first surface of the cell block, and including a first cooling channel; a second cover plate facing a second surface of the cell block, and including a second cooling channel; a supply pipe into which a cooling fluid supplied from the outside flows, the supply pipe including a first supply channel connected to an inlet of the first cooling channel and a second supply channel connected to an inlet of the second cooling channel; and a discharge pipe configured to discharge the cooling fluid to the outside, the discharge pipe including a first discharge channel connected to an outlet of the first cooling channel and a second discharge channel connected to an outlet of the second cooling channel.

In example embodiments, the supply pipe may include a single inlet, the first supply channel may extend between the inlet of the supply pipe and the inlet of the first cooling channel, and the second supply channel may extend between the inlet of the supply pipe and the inlet of the second cooling channel.

In example embodiments, the discharge pipe may include a single outlet, the first discharge channel may extend between the outlet of the first cooling channel and the outlet of the discharge pipe, and the second discharge channel may extend between the outlet of the second cooling channel and the outlet of the discharge pipe.

In example embodiments, the first supply channel of the supply pipe, the first cooling channel of the first cover plate, and the first discharge channel of the discharge pipe may be sequentially connected, and the second supply channel of the supply pipe, the second cooling channel of the second cover plate, and the second discharge channel of the discharge pipe may be sequentially connected.

In example embodiments, the battery cell assembly may further include a third cover plate facing a third surface of the cell block opposite to the second surface of the cell block, and including a third cooling channel, the supply pipe may further include a third supply channel connected to an inlet of the third cooling channel, and the discharge pipe may further include a third discharge channel connected to an outlet of the third cooling channel.

In example embodiments, the supply pipe may include a single inlet, the first supply channel may extend between the inlet of the supply pipe and the inlet of the first cooling channel, the second supply channel may extend between the inlet of the supply pipe and the inlet of the second cooling channel, and the third supply channel may extend between the inlet of the supply pipe and the inlet of the third cooling channel.

In example embodiments, the discharge pipe may include a single outlet, the first discharge channel may extend between the outlet of the first cooling channel and the outlet of the discharge pipe, the second discharge channel may extend between the outlet of the second cooling channel and the outlet of the discharge pipe, and the third discharge channel may extend between the outlet of the third cooling channel and the outlet of the discharge pipe.

In example embodiments, the first supply channel of the supply pipe, the first cooling channel of the first cover plate, and the first discharge channel of the discharge pipe may be sequentially connected, the second supply channel of the supply pipe, the second cooling channel of the second cover plate, and the second discharge channel of the discharge pipe may be sequentially connected, and the third supply channel of the supply pipe, the third cooling channel of the third cover plate, and the third discharge channel of the discharge pipe may be sequentially connected.

In example embodiments, the second cover plate may further include a fastening part configured to be fastened to an external support structure.

In example embodiments, the supply pipe may include a first main supply pipe connected to the first cover plate, and a first branch supply pipe extending between the main supply pipe and the second cover plate, and the first main supply pipe may include a first part connected to the first cover plate and extending downward from the first cover plate, a second part extending from the first part in a direction crossing a direction in which the first part extends, and a third part extending upward from the second part, and including an inlet into which the cooling fluid supplied from the outside flows.

An aspect of the present invention provides a battery pack including a pack housing, and a battery cell assembly accommodated in the pack housing, in which the battery cell assembly includes: a cell block with a plurality of battery cells; a first cover plate facing a first surface of the cell block and including a first cooling channel; a second cover plate facing a second surface of the cell block and including a second cooling channel; a supply pipe into which a cooling fluid supplied from the outside flows, the supply pipe including a first supply channel connected to an inlet of the first cooling channel and a second supply channel connected to an inlet of the second cooling channel; and a discharge pipe configured to discharge the cooling fluid to the outside, the discharge pipe including a first discharge channel connected to an outlet of the first cooling channel and a second discharge channel connected to an outlet of the second cooling channel, and wherein a space formed by spacing the battery cell assembly apart from a bottom wall of the pack housing is provided between the battery cell assembly and the bottom wall of the pack housing.

In example embodiments, the supply pipe may include a single inlet, the discharge pipe may include a single outlet, the first supply channel may extend between the inlet of the supply pipe and the inlet of the first cooling channel, the second supply channel may extend between the inlet of the supply pipe and the inlet of the second cooling channel, the first discharge channel may extend between the outlet of the first cooling channel and the outlet of the discharge pipe, and the second discharge channel may extend between the outlet of the second cooling channel and the outlet of the discharge pipe.

In example embodiments, the battery cell assembly may include a first path formed by sequentially connecting the first supply channel, the first cooling channel, and the first discharge channel, and a second path formed by sequentially connecting the second supply channel, the second cooling channel, and the second discharge channel.

In example embodiments, the battery cell assembly may further include a third cover plate facing a third surface of the cell block opposite to the second surface of the cell block and including a third cooling channel, the supply pipe may further include a third supply channel extending between the inlet of the supply pipe and an inlet of the third cooling channel, the discharge pipe may further include a third discharge channel extending between an outlet of the third cooling channel and the outlet of the discharge pipe, and the third supply channel, the third cooling channel, and the third discharge channel may be sequentially connected.

In example embodiments, the second cover plate may further include a first fastening part configured to be fastened to a support structure on the bottom wall of the pack housing, and the third cover plate may further include a second fastening part configured to be fastened to another support structure on the bottom wall of the pack housing.

### [Advantageous Effects]

According to embodiments of the present invention, each battery cell assembly has a multi-faceted cooling structure for simultaneously cooling two or more surfaces thereof to improve heat generation and temperature deviations between battery cells and heat generation and temperature deviations between battery cell assemblies in a battery pack. Ultimately, temperatures of the battery cells and the battery cell assemblies can be more uniformly controlled to improve the safety and reliability of the battery cell assemblies and the battery pack including the same.

Furthermore, according to example embodiments of the present invention, a battery cell assembly has the multi-faceted cooling structure, thus reducing an increase of temperature of battery cells during quick charging. Accordingly, a derating issue caused by an increase of temperature of the battery cells can be reduced or prevented, and a customer demand for shortening a quick charging time can be satisfied.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery cell assembly according to example embodiments of the present invention.
FIG. 2 is a conceptual diagram schematically illustrating a flow path of a cooling fluid in the battery cell assembly according to example embodiments of the present invention.
FIG. 3 is a perspective view of a supply pipe of the battery cell assembly according to example embodiments of the present invention.
FIG. 4 is a perspective view of a discharge pipe of the battery cell assembly according to example embodiments of the present invention.
FIG. 5 is a cross-sectional view of a battery pack according to example embodiments of the present invention.
FIG. 6 is a schematic view of an electric vehicle in which a battery pack according to example embodiments of the present invention is installed.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

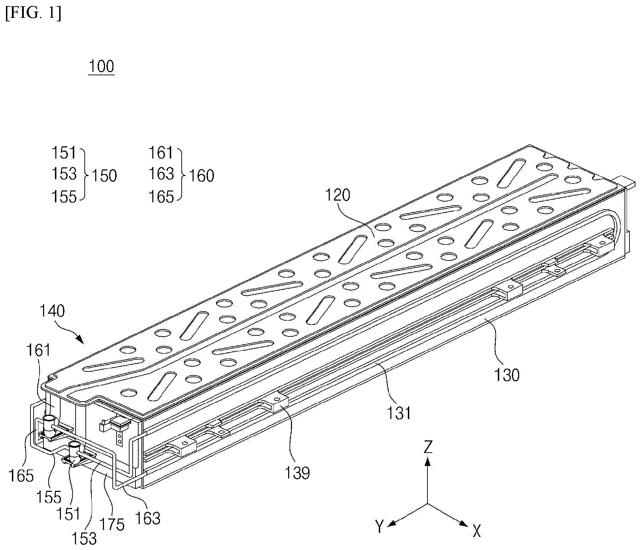

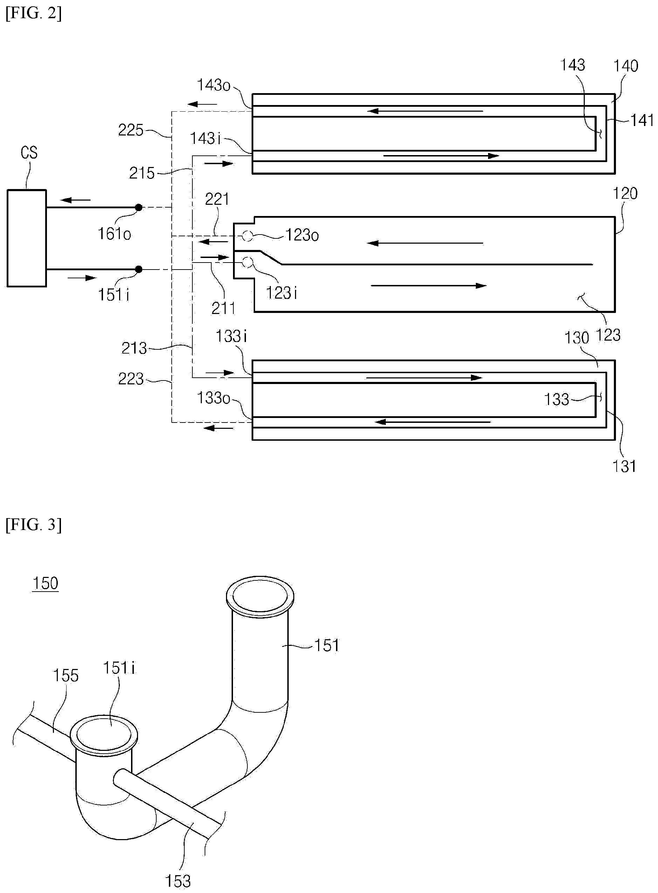

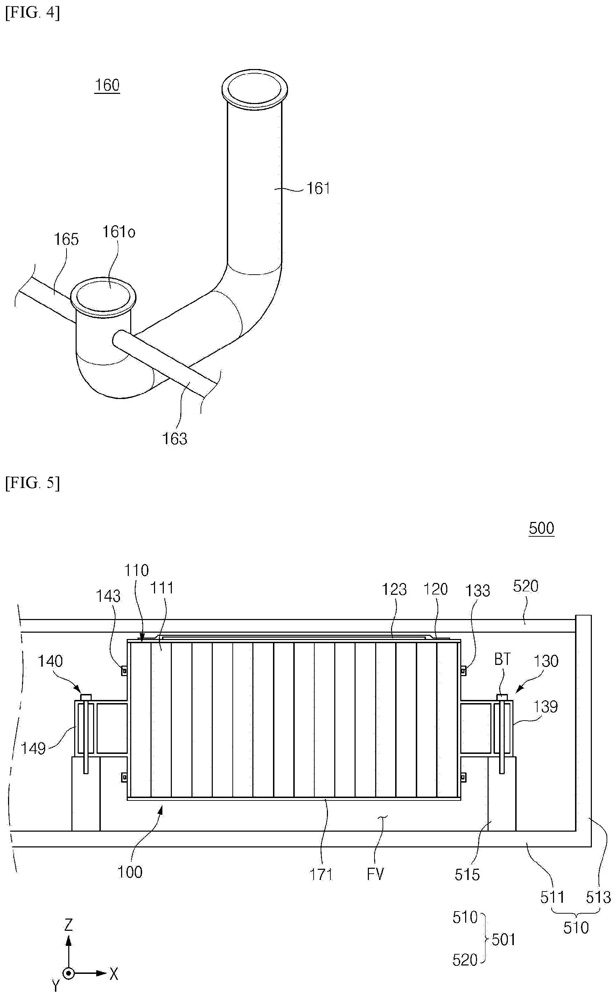

FIGS. 1 to 4 are diagrams illustrating a battery cell assembly 100 according to example embodiments of the present invention.FIG. 1 is a perspective view of the battery cell assembly 100.FIG. 2 is a conceptual view schematically illustrating a flow path of a cooling fluid in the battery cell assembly 100. FIG. 3 is a perspective view of a supply pipe 150 of the battery cell assembly 100.FIG. 4 is a perspective view of a discharge pipe 160 of the battery cell assembly 100.

Referring to FIGS. 1 to 4, the battery cell assembly 100 may include a cell block 110 of FIG. 5, an upper cover plate 120, a first side cover plate 130, a second side cover plate 140, a lower cover plate 171, the supply pipe 150, and the discharge pipe 160. The upper cover plate 120, the first side cover plate 130, the second side cover plate 140, and the lower cover plate 171 of FIG. 5 may form a case of the battery cell assembly 100 that provides an accommodation space for accommodating the cell block 110.In the present specification, the upper cover plate 120 may be referred to as a first cover plate, the first side cover plate 130 may be referred to as a second cover plate, the second side cover plate 140 may be referred to as a third cover plate, and the lower cover plate 171 may be referred to as a fourth cover plate.

The cell block 110 may include a plurality of battery cells 111 of FIG. 5.Each of the battery cells 111 is a basic unit of a lithium ion battery, i.e., a secondary battery.Each of the battery cells 111 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one battery cell assembly 100 in a first direction (an X-axis direction).In example embodiments, in each battery cell assembly 100, the plurality of battery cells 111 may be pouch type battery cells whose length in the first direction (the X-axis direction) is less than a length thereof in a second direction (a Y-axis direction) and be stacked in the first direction (the X-axis direction).

When viewed from a plan view, the cell block 110 may have a rectangular shape whose length in the first direction (the X-axis direction) is less than a length thereof in the second direction (the Y-axis direction).In this case, the cell block 110 may have a first side surface and a second side surface that face each other in the first direction (the X-axis direction), a front surface and a rear surface that face each other in the second direction (the Y-axis direction), and an upper surface and a lower surface that face each other in a third direction (a Z-axis direction).In the present specification, the upper surface of the cell block 110 may be referred to as a first surface, the first side surface of the cell block 110 may be referred to as a second surface, the second side surface of the cell block 110 may be referred to as a third surface, and the lower surface of the cell block 110 may be referred to as a fourth surface.

A bus bar frame on which bus bars are mounted may be on each of the front and rear surfaces of the cell block 110.A plurality of bus bars may be mounted on the bus bar frame on the front surface of the cell block 110, and a plurality of bus bars may be mounted on the bus bar frame on the rear surface of the cell block 110. The battery cell assembly 100 may include an end plate 175 to cover a bus bar frame connected to the front or rear surface of the cell block 110.

A bus bar may be coupled to an electrode lead of the battery cell 111. For example, the bus bar may be coupled to the electrode lead of the battery cell 111 by welding. For example, each bus bar may be an inter-bus bar connected to electrode leads connected to different battery cells 111 belonging to the cell block 110 to electrically connect the different battery cells 111. For example, each bus bar may be a terminal-bus bar for electrically connecting the battery cell assembly 100 to an external battery cell assembly or an electrical device.

In example embodiments, the battery cell assembly 100 may include a single cell block 110.In example embodiments, the battery cell assembly 100 may include a cell block array with a plurality of cell blocks 110 arranged in the second direction (the Y-axis direction). For example, the battery cell assembly 100 may include two cell blocks 110 arranged in the second direction (the Y-axis direction). For example, the battery cell assembly 100 may include a first cell block and a second cell block arranged in the second direction (the Y-axis direction) and electrically connected to each other.

The upper cover plate 120 may cover the upper surface of the cell block 110. The upper cover plate 120 may be coupled to upper ends of the first and second side cover plates 130 and 140 on opposite sides of the cell block 110. For example, one side of the upper cover plate 120 may be coupled to the upper end of the first side cover plate 130 by welding, and another side thereof may be coupled to the upper end of the second side cover plate 140 by welding.

The upper cover plate 120 may be attached to the upper surface of the cell block 110 and be thermally coupled to the cell block 110. For example, the upper cover plate 120 may be attached to the upper surface of the cell block 110 through a thermally conductive adhesive layer between the upper cover plate 120 and the upper surface of the cell block 110. For example, the thermally conductive adhesive layer may include a thermal interface material (TIM).

The upper cover plate 120 may include a first cooling channel 123 configured to allow a cooling fluid to flow therethrough, and be configured to cool the cell block 110.A cooling fluid supplied from the outside of the battery cell assembly 100 may flow into the first cooling channel 123 through an inlet 123i of the first cooling channel 123, flow along the first cooling channel 123, and thereafter flow out of the upper cover plate 120 through an outlet 123o of the first cooling channel 123. The first cooling channel 123 may have a single path extending from the inlet 123i to the outlet 123o. The inlet 123i and the outlet 123o of the first cooling channel 123 may be provided on a front end of the upper cover plate 120 or a front end of the battery cell assembly 100. The upper cover plate 120 may include a protruding part protruding from the front surface of the cell block 110 in the second direction (the Y-axis direction), and the inlet 123i and the outlet 123o of the first cooling channel 123 may be provided on the protruding part of the upper cover plate 120. The inlet 123i and the outlet 123o of the first cooling channel 123 may be provided on a lower surface of the upper cover plate 120.While the cooling fluid flows along the first cooling channel 123, the battery cell assembly 100 may be cooled. For example, the upper cover plate 120 may be manufactured by bonding two plates together, and the first cooling channel 123 may include a space defined between the two plates.

The first side cover plate 130 may be disposed to face the first side surface of the cell block 110 and cover the first side surface of the cell block 110. The first side cover plate 130 may include a second cooling channel 133 configured to allow a cooling fluid to flow therethrough, and be configured to cool the cell block 110. The first side cover plate 130 may include a pipe 131 with the second cooling channel 133.A cooling fluid supplied from the outside of the battery cell assembly 100 may flow into the second cooling channel 133 through an inlet 133i of the second cooling channel 133, flow along the second cooling channel 133, and thereafter flow out of the first side cover plate 130 through an outlet 133o of the second cooling channel 133. The second cooling channel 133 may have a single path extending from the inlet 133i to the outlet 133o thereof. The inlet 133i and outlet 133o of the second cooling channel 133 may be provided at a front end of the first side cover plate 130 or a front end of the battery cell assembly 100.While the cooling fluid flows along the second cooling channel 133, the battery cell assembly 100 may be cooled.

The second side cover plate 140 is disposed to face the second side surface of the cell block 110 and cover the second side surface of the cell block 110. The second side cover plate 140 may include a third cooling channel 143 configured to allow a cooling fluid to flow therethrough, and be configured to cool the cell block 110. The second side cover plate 140 may include a pipe 141 with the third cooling channel 143.A cooling fluid supplied from the outside of the battery cell assembly 100 may flow into the third cooling channel 143 through an inlet 143i of the third cooling channel 143, flow along the third cooling channel 143, and thereafter flow out of the second side cover plate 140 through an outlet 143o of the third cooling channel 143. The third cooling channel 143 may have a single path extending from the inlet 143i to the outlet 143o. The inlet 143i and the outlet 143o of the third cooling channel 143 may be provided at a front end of the second side cover plate 140 or the front end of the battery cell assembly 100.While the cooling fluid flows along the third cooling channel 143, the battery cell assembly 100 may be cooled.

The battery cell assembly 100 may be fastened to the pack housing 501 of FIG. 5 by a side mounting method in which the battery cell assembly 100 is fastened to the pack housing 501 through the first side cover plate 130 and/or the second side cover plate 140. For example, the first side cover plate 130 may include a first fastening part 139 protruding in the first direction (the X-axis direction). The first fastening part 139 may include a fastening hole through which a fastening member such as a bolt is passed. The first fastening part 139 may be fastened to and supported by a support structure of the pack housing 501 by a fastening member such as a bolt. For example, the second side cover plate 140 may include a second fastening part 149 of FIG. 5 protruding in the first direction (the X-axis direction). The second fastening part 149 may include a fastening hole through which a fastening member such as a bolt is passed. The second fastening part 149 may be fastened to and supported by the support structure of the pack housing 501 by a fastening member such as a bolt.

The lower cover plate 171 may be disposed to face the lower surface of the cell block 110 and cover the lower side of the cell block 110. The lower cover plate 171 may be coupled to lower ends of the first and second side cover plates 130 and 140 on opposite sides of the cell block 110. For example, one side of the lower cover plate 171 may be coupled to the lower end of the first side cover plate 130 by welding, and another side thereof may be coupled to the lower end of the second side cover plate 140 by welding. The lower cover plate 171, the upper cover plate 120, and the first and second side cover plates 130 and 140 may form a case surrounding four surfaces of the cell block 110.In example embodiments, the lower cover plate 171 may include a venting passage for exhausting a high-temperature gas caused by the cell block 110 to a space under the cell block 110.

The supply pipe 150 may be supplied with a cooling fluid from an external cooling fluid supply CS, and transmit the cooling fluid to the inlet 123i of the first cooling channel 123 of the upper cover plate 120, the inlet 133i of the second cooling channel 133 of the first side cover plate 130, and the inlet 143i of the third cooling channel 143 of the second side cover plate 140.

The supply pipe 150 may include a single inlet 151i into which the cooling fluid supplied from the cooling fluid supply CS flows. The supply pipe 150 may include a first supply channel 211 extending from an inlet 151i of the supply pipe 150 to the inlet 123i of the first cooling channel 123 of the upper cover plate 120, a second supply channel 213 extending from the inlet 151i of the supply pipe 150 to the inlet 133i of the second cooling channel 133 of the first side cover plate 130, and a third supply channel 215 extending from the inlet 151i of the supply pipe 150 to the inlet 143i of the third cooling channel 143 of the second side cover plate 140. The first supply channel 211, the second supply channel 213, and the third supply channel 215 may communicate with one another.

The supply pipe 150 may include a main supply pipe 151 coupled to the upper cover plate 120, a first branch supply pipe 153 coupled to the main supply pipe 151 and the first side cover plate 130, and a second branch supply pipe 155 coupled to the main supply pipe 151 and the second side cover plate 140. The main supply pipe 151, the first branch supply pipe 153, and the second branch supply pipe 155 may be coupled to one another and form an integrated supply pipe 150.

In other example embodiments, the first branch supply pipe 153 and the second branch supply pipe 155 may be physically separated from the main supply pipe 151, and in this case, a channel in the first branch supply pipe 153 and a channel in the second branch supply pipe 155 may not communicate with a channel of the main supply pipe 151.

The main supply pipe 151 may include a first supply channel 211 connected to the inlet 123i of the first cooling channel 123 of the upper cover plate 120.An inlet 151i of the main supply pipe 151 may correspond to the inlet 151i of the supply pipe 150. The first branch supply pipe 153 may branch from the main supply pipe 151 and extend to the inlet 133i of the second cooling channel 133 of the first side cover plate 130. The first branch supply pipe 153 may include at least one part of the second supply channel 213, and the at least one part of the second supply channel 213 in the first branch supply pipe 153 may communicate with the first supply channel 211 of the main supply pipe 151. The second branch supply pipe 155 may branch from the main supply pipe 151 and extend to the inlet 143i of the third cooling channel 143 of the second side cover plate 140. The second branch supply pipe 155 may include at least one part of the third supply channel 215, and the at least one part of the third supply channel 215 in the second branch supply pipe 155 may communicate with the first supply channel 211 of the main supply pipe 151.

In example embodiments, the main supply pipe 151 may have a U-shaped cross section. More specifically, the main supply pipe 151 may include a first part extending downward from the inlet 123i of the first cooling channel 123 of the upper cover plate 120, a second part extending from the first part in a direction crossing a direction in which the first part extends, and a third part extending upward from the second part. An outlet connected to the inlet 123i of the first cooling channel 123 of the upper cover plate 120 may be provided at an upper end of the first part of the main supply pipe 151, and an inlet 151i through which a cooling fluid supplied from the outside flows may be provided at an upper end of the third part of the main supply pipe 151.

The discharge pipe 160 may discharge a cooling fluid discharged from the upper cover plate 120, the first side cover plate 130, and the second side cover plate 140 toward the cooling fluid supply CS.

The discharge pipe 160 may include a single outlet 161o configured to discharge the cooling fluid to the outside. The discharge pipe 160 may include a first discharge channel 221 extending from the outlet 123o of the first cooling channel 123 of the upper cover plate 120 to the outlet 161o of the discharge pipe 160, a second discharge channel 223 extending from the outlet 133o of the second cooling channel 133 of the first side cover plate 130 to the outlet 161o of the discharge pipe 160, and a third discharge channel 225 extending from the outlet 143o of the third cooling channel 143 of the second side cover plate 140 to the outlet 161o of the discharge pipe 160. The first discharge channel 221, the second discharge channel 223, and the third discharge channel 225 may communicate with one another.

The discharge pipe 160 may include a main discharge pipe 161 coupled to the upper cover plate 120, a first branch discharge pipe 163 coupled to the main discharge pipe 161 and the first side cover plate 130, and a second branch discharge pipe 165 coupled to the main discharge pipe 161 and the second side cover plate 140. The main discharge pipe 161, the first branch discharge pipe 163, and the second branch discharge pipe 165 may be coupled to one another, and form an integrated discharge pipe 160.

In other example embodiments, the first branch discharge pipe 163 and the second branch discharge pipe 165 may be physically separated from the main discharge pipe 161, and in this case, a channel in the first branch discharge pipe 163 and a channel in the second branch discharge pipe 165 may not communicate with a channel of the main discharge pipe 161.

The main discharge pipe 161 may include the first discharge channel 221 connected to the outlet 123o of the first cooling channel 123 of the upper cover plate 120.An outlet 161o of the main discharge pipe 161 may correspond to the outlet 161o of the discharge pipe 160. The first branch discharge pipe 163 may branch from the main discharge pipe 161 and extend to the outlet 133o of the second cooling channel 133 of the first side cover plate 130. The first branch discharge pipe 163 may include at least one part of the second discharge channel 223, and the at least one part of the second discharge channel 223 in the first branch discharge pipe 163 may communicate with the first discharge channel 221 of the main discharge pipe 161. The second branch discharge pipe 165 may branch from the main discharge pipe 161 and extend to the outlet 143o of the third cooling channel 143 of the second side cover plate 140. The second branch discharge pipe 165 may include at least one part of the third discharge channel 225, and the at least one part of the third discharge channel 225 in the second branch discharge pipe 165 may communicate with the first discharge channel 221 of the main discharge pipe 161.

In example embodiments, the main discharge pipe 161 may have a U-shaped cross section. More specifically, the main discharge pipe 161 may include a fourth part extending downward from the outlet 123o of the first cooling channel 123 of the upper cover plate 120, a fifth part extending from the fourth part in a direction crossing a direction in which the fourth part extends, and a sixth part extending upward from the fifth part. An inlet connected to the outlet 123o of the first cooling channel 123 of the upper cover plate 120 may be provided at an upper end of the fourth part of the main discharge pipe 161, and an outlet 161o through which the cooling fluid is discharged to the outside may be provided at an upper end of the sixth part of the main discharge pipe 161.

Hereinafter, a flow path of the cooling fluid in the battery cell assembly 100 will be described in more detail with reference to FIG. 2.In FIG. 2, an arrow indicates a direction in which the cooling fluid flows. In FIG. 2, the first supply channel 211, the second supply channel 213, and the third supply channel 215 are indicated by an alternated long and short dash line, and the first discharge channel 221, the second discharge channel 223, and the third discharge channel 225 are indicated by a dashed line.

The cooling fluid supply CS may supply the cooling fluid to the inlet 151i of the supply pipe 150. The cooling fluid is supplied to the upper cover plate 120, the first side cover plate 130, and the second side cover plate 140 through the supply pipe 150, is heated due to heat exchange with the cell block 110 when flowing along the upper cover plate 120, the first side cover plate 130, and the second side cover plate 140, and is discharged toward the cooling fluid supply CS through the discharge pipe 160.

More specifically, the cooling fluid may sequentially flow through the first supply channel 211 of the supply pipe 150, the first cooling channel 123 of the upper cover plate 120, and the first discharge channel 221, and thereafter be discharged to the cooling fluid supply CS through the outlet 161o of the discharge pipe 160. The first supply channel 211 of the supply pipe 150, the first cooling channel 123 of the upper cover plate 120, and the first discharge channel 221 may be sequentially connected to form a first circulation path of the cooling fluid provided to the battery cell assembly 100.Additionally, the cooling fluid may flow through the second supply channel 213 of the supply pipe 150, the second cooling channel 133 of the first side cover plate 130, and the second discharge channel 223, and thereafter be discharged to the cooling fluid supply CS through the outlet 161o of the discharge pipe 160. The second supply channel 213 of the supply pipe 150, the second cooling channel 133 of the first side cover plate 130, and the second discharge channel 223 may be sequentially connected to form a second circulation path of the cooling fluid provided to the battery cell assembly 100. The cooling fluid may sequentially flow through the third supply channel 215 of the supply pipe 150, the third cooling channel 143 of the second side cover plate 140, and the third discharge channel 225, and thereafter be discharged to the cooling fluid supply CS through the outlet 161o of the discharge pipe 160. The third supply channel 215 of the supply pipe 150, the third cooling channel 143 of the second side cover plate 140, and the third discharge channel 225 may be sequentially connected to form a third circulation path of the cooling fluid provided to the battery cell assembly 100.

According to embodiments of the present invention, the battery cell assembly 100 has a multi-faceted cooling structure for simultaneously cooling two or more surfaces of the battery cell assembly 100 to improve heat generation and temperature deviations between the battery cells 111 and heat generation and temperature deviations between battery cell assemblies 100 in a battery pack. Accordingly, temperatures of the battery cells 111 and the battery cell assembly 100 may be more uniformly controlled, thereby improving the safety and reliability of the battery cell assembly 100 and a battery pack including the battery cell assembly 100.

Furthermore, according to example embodiments of the present invention, the battery cell assembly 100 has the multi-faceted cooling structure, thus reducing an increase of temperature of the battery cells 111 during quick charging. Accordingly, a derating issue caused by an increase of temperature of the battery cells 111 can be reduced or prevented, and a customer demand for shortening a quick charging time can be satisfied.

### (Second Embodiment)

FIG. 5 is a cross-sectional view of a battery pack 500 according to example embodiments of the present invention.

Referring to FIG. 5, the battery pack 500 may include a pack housing 501 and a battery cell assembly 100 mounted in the pack housing 501. The battery pack 500 may include one or more battery cell assemblies 100 mounted in the pack housing 501.In example embodiments, the battery pack 500 may include two or more battery cell assemblies 100 arranged in the first direction (the X-axis direction).

The pack housing 501 may include a lower housing 510 with an accommodation space in which the battery cell assembly 100 is accommodated, and a pack lid 520 coupled to the lower housing 510 to cover the lower housing 510 in which the battery cell assembly 100 is accommodated. The accommodation space of the lower housing 510 may be defined by a bottom wall 511 facing a lower surface of a cell block 110 of each of the battery cell assemblies 100 and a side wall 513 on the perimeter of the bottom wall 511.

When the battery pack 500 is mounted in a vehicle, a cabin room in which a passenger rides may be located above the pack lid 520, and the ground on which the vehicle travels may be located below the lower housing 510.

The battery cell assembly 100 may be mounted in the pack housing 501 by the side mounting method. More specifically, a first fastening part 139 of a first side cover plate may be fastened to and supported by a corresponding support structure 515 among support structures 515 on the lower housing 510 through a bolt BT, and a second fastening part 149 of a second side cover plate may be fastened to and supported by a corresponding support structure 515 among the support structures 515 on the lower housing 510 through a bolt BT.

A free volume FV may be provided between the bottom wall 511 of the lower housing 510 and the battery cell assembly 100.A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, a plurality of battery cell assemblies 100 may be prevented from being damaged due to the impact. The free volume FV may be understood as an empty space between each of the plurality of battery cell assemblies 100 and the lower housing 510. The free volume FV may be available as a space for freely allowing deformation of the lower housing 510 to some extent when the lower housing 510 deforms toward the battery cell assembly 100 due to an impact applied to the lower part of the vehicle.

A height of the free volume FV and a distance between the bottom wall 511 of the lower housing 510 and the battery cell assembly 100 may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when a thickness or rigidity of the frames of the vehicle or the bottom wall 511 of the lower housing 510 is relatively large, at least one of the size and height of the free volume FV may be relatively reduced. When the thickness or rigidity of the frames of the vehicle or the bottom wall 511 of the lower housing 510 is relatively small, the bottom wall 511 of the lower housing 510 is highly likely to deform and thus at least one of the size and height of the free volume FV may be relatively increased to protect the battery cell assembly 100.When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom wall 511 of the lower housing 510 may have to be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a degree of damage to a battery cell 111 included in the battery cell assembly 100. For example, when damage tolerance of the battery cell 111 is 1 mm, the free volume FV may be determined to prevent the battery cell 111 from deforming by more than 1 mm when the lower housing 510 deforms and presses a lower surface of the battery cell 111.In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, an upper surface of the battery cell assembly 100 may be in close contact with a lower surface of the pack lid 520.When there is a space between the battery cell assembly 100 and the pack lid 520, a high-temperature gas may flow into the space between the battery cell assembly 100 and the pack lid 520 during thermal runaway and thus heat and flames may propagate to an adjacent battery cell assembly 100. The heat and the flames may also be transferred to the pack lid 520 and thus may affect the cabin room above the pack lid 520. Therefore, a gas or flames generated in the battery pack 500 may be guided to the free volume FV by bringing the upper surface of the battery cell assembly 100 and the lower surface of the pack lid 520 into close contact with each other.

### (Third Embodiment)

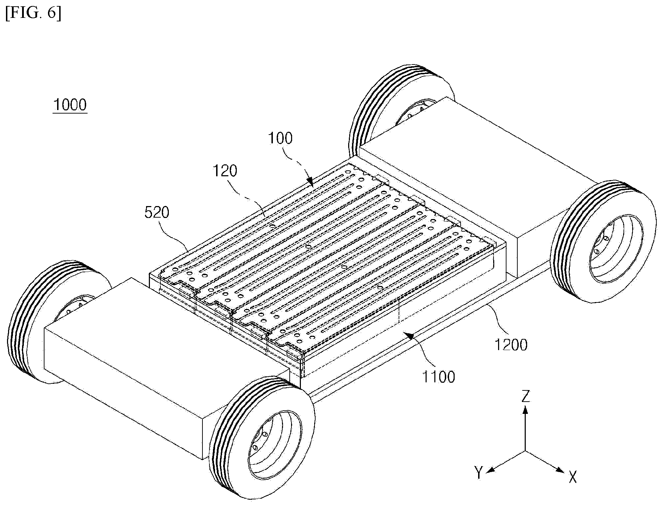

FIG. 6 is a schematic view of an electric vehicle 1000 in which a battery pack 1100 according to example embodiments of the present invention is mounted.

For the sake of simplicity, FIG. 6 illustrates only a vehicle body frame 1200 forming a lower frame of the vehicle, and the battery pack 1100 and tires that are coupled to the vehicle body frame 1200. The battery pack 1100 may include the battery pack 500 described above with reference to FIGS. 1 to 3.

In the case of a general battery pack, battery cell assemblies are installed at the bottom of a pack housing of the battery pack.In embodiments, the free volume FV (see FIG. 5) may be provided under battery cell assemblies 100 of the battery pack 1100.That is, due to no space between the battery cell assembly 100 and the pack lid 520, a gas generated in the battery cell assembly 100 may be prevented from being transferred to a cabin room corresponding to an upper part of the vehicle. The gas is guided to the free volume FV between the battery cell assembly 100 and a pack housing of the battery pack 1100. The gas may flow through the free volume FV and thereafter be discharged to a lower side of the vehicle through a gas exhaust installed in the battery pack 1100.In addition, according to the present embodiments, in the battery pack 1100, the free volume FV is provided between the battery cell assembly 100 and the pack housing and thus the battery cell assembly 100 can be prevented from being damaged regardless of the deformation of the pack housing.

According to embodiments of the present invention, the battery pack 1100 and the electric vehicle 1000 including the battery pack 1100 are capable of increasing the safety of passengers. In addition, the battery cell assembly 100 that is a key component can be protected and the durabilities of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell assembly comprising:
a cell block with a plurality of battery cells;
a first cover plate facing a first surface of the cell block, and including a first cooling channel;
a second cover plate facing a second surface of the cell block, and including a second cooling channel;
a supply pipe into which a cooling fluid supplied from the outside flows, the supply pipe including a first supply channel connected to an inlet of the first cooling channel and a second supply channel connected to an inlet of the second cooling channel; and
a discharge pipe configured to discharge the cooling fluid to the outside, the discharge pipe including a first discharge channel connected to an outlet of the first cooling channel and a second discharge channel connected to an outlet of the second cooling channel.

2. The battery cell assembly of claim 1, wherein
the supply pipe includes a single inlet,
the first supply channel extends between the inlet of the supply pipe and the inlet of the first cooling channel, and
the second supply channel extends between the inlet of the supply pipe and the inlet of the second cooling channel.

3. The battery cell assembly of claim 1, wherein
the discharge pipe includes a single outlet,
the first discharge channel extends between the outlet of the first cooling channel and the outlet of the discharge pipe, and
the second discharge channel extends between the outlet of the second cooling channel and the outlet of the discharge pipe.

4. The battery cell assembly of claim 2 or 3, wherein
the first supply channel of the supply pipe, the first cooling channel of the first cover plate, and the first discharge channel of the discharge pipe are sequentially connected, and
the second supply channel of the supply pipe, the second cooling channel of the second cover plate, and the second discharge channel of the discharge pipe are sequentially connected.

5. The battery cell assembly of claim 1, further comprising
a third cover plate facing a third surface of the cell block opposite to the second surface of the cell block, and including a third cooling channel,
wherein the supply pipe further includes a third supply channel connected to an inlet of the third cooling channel, and
the discharge pipe further includes a third discharge channel connected to an outlet of the third cooling channel.

6. The battery cell assembly of claim 5, wherein
the supply pipe comprises a single inlet,
the first supply channel extends between the inlet of the supply pipe and the inlet of the first cooling channel,
the second supply channel extends between the inlet of the supply pipe and the inlet of the second cooling channel, and
the third supply channel extends between the inlet of the supply pipe and the inlet of the third cooling channel.

7. The battery cell assembly of claim 6, wherein
the discharge pipe comprises a single outlet,
the first discharge channel extends between the outlet of the first cooling channel and the outlet of the discharge pipe,
the second discharge channel extends between the outlet of the second cooling channel and the outlet of the discharge pipe, and
the third discharge channel extends between the outlet of the third cooling channel and the outlet of the discharge pipe.

8. The battery cell assembly of claim 7, wherein
the first supply channel of the supply pipe, the first cooling channel of the first cover plate, and the first discharge channel of the discharge pipe are sequentially connected,
the second supply channel of the supply pipe, the second cooling channel of the second cover plate, and the second discharge channel of the discharge pipe are sequentially connected, and
the third supply channel of the supply pipe, the third cooling channel of the third cover plate, and the third discharge channel of the discharge pipe are sequentially connected.

9. The battery cell assembly of claim 1, wherein
the second cover plate further includes a fastening part configured to be fastened to an external support structure.

10. The battery cell assembly of claim 1, wherein
the supply pipe comprises:
a first main supply pipe connected to the first cover plate; and
a first branch supply pipe extending between the main supply pipe and the second cover plate,
wherein the first main supply pipe comprises:
a first part connected to the first cover plate and extending downward from the first cover plate;
a second part extending from the first part in a direction crossing a direction in which the first part extends; and
a third part extending upward from the second part, and including an inlet into which the cooling fluid supplied from the outside flows.

11. A battery pack comprising:
a pack housing; and
a battery cell assembly accommodated in the pack housing,
wherein the battery cell assembly comprises:
a cell block with a plurality of battery cells;
a first cover plate facing a first surface of the cell block and including a first cooling channel;
a second cover plate facing a second surface of the cell block and including a second cooling channel;
a supply pipe into which a cooling fluid supplied from the outside flows, the supply pipe including a first supply channel connected to an inlet of the first cooling channel and a second supply channel connected to an inlet of the second cooling channel; and
a discharge pipe configured to discharge the cooling fluid to the outside, the discharge pipe including a first discharge channel connected to an outlet of the first cooling channel and a second discharge channel connected to an outlet of the second cooling channel, and
wherein a space formed by spacing the battery cell assembly apart from a bottom wall of the pack housing is provided between the battery cell assembly and the bottom wall of the pack housing.

12. The battery pack of claim 11, wherein
the supply pipe comprises a single inlet,
the discharge pipe comprises a single outlet,
the first supply channel extends between the inlet of the supply pipe and the inlet of the first cooling channel,
the second supply channel extends between the inlet of the supply pipe and the inlet of the second cooling channel,
the first discharge channel extends between the outlet of the first cooling channel and the outlet of the discharge pipe, and
the second discharge channel extends between the outlet of the second cooling channel and the outlet of the discharge pipe.

13. The battery pack of claim 12, wherein
the battery cell assembly comprises:
a first path formed by sequentially connecting the first supply channel, the first cooling channel, and the first discharge channel; and
a second path formed by sequentially connecting the second supply channel, the second cooling channel, and the second discharge channel.

14. The battery pack of claim 13, wherein
the battery cell assembly further comprises a third cover plate facing a third surface of the cell block opposite to the second surface of the cell block and including a third cooling channel,
the supply pipe further comprises a third supply channel extending between the inlet of the supply pipe and an inlet of the third cooling channel,
the discharge pipe further comprises a third discharge channel extending between an outlet of the third cooling channel and the outlet of the discharge pipe, and
the third supply channel, the third cooling channel, and the third discharge channel are sequentially connected.

15. The battery pack of claim 14, wherein
the second cover plate further comprises a first fastening part configured to be fastened to a support structure on the bottom wall of the pack housing, and
the third cover plate further comprises a second fastening part configured to be fastened to another support structure on the bottom wall of the pack housing.
